# EUROPEAN PATENT SPECIFICATION

(11) **EP 0 958 757 B1**
(45) Date of publication and mention of the grant of the patent: **11.02.2004**
(21) Application number: 99201647.7
(22) Date of filing: 20.05.1999
(51) Int. Cl.: A46B 3/18, A46B 9/04, A61C 15/00

(54) **Interdental cleaner**
Interdentalreiniger
Dispositif de nettoyage interdentaire

(30) Priority: 20.05.1998 NL 1009229
(43) Date of publication of application: 24.11.1999
(73) Proprietor: Voprak Lactona B.V., 4615 AC Bergen op Zoom (NL)
(72) Inventor: Koning, Jan Willem Gerrit, 3648 CP Wilnis (NL)
(74) Representative: Louet Feisser, Arnold

(56) References cited:
- EP-A- 0 663 161
- EP-A- 0 680 707
- WO-A-93/05679
- WO-A-95/06444
- FR-A- 2 755 593

## Description

The invention relates to an interdental cleaner comprising an elongated part with substantially radially outwardly extending brush hairs. Such an interdental cleaner can be inserted between teeth with its elongated part, as a result of which the space which is present between said teeth can be cleaned by the brushing action.

Such interdental cleaners are commercially available in a number of sizes, wherein the size in fact indicates the diameter of the brush. Such a cleaner may be provided with a handle, which can be taken hold of with one's fingers, and such cleaners may also be supplied in such a form that they can be fixed in a handle. WO 95/06444 discloses such an interdental cleaner.

The object of the invention is to provide an interdental cleaner which has an improved operation and which provides a pleasant sensation upon being used.

In order to accomplish that objective, the elongated part of the cleaner is provided with hairs, wherein the hairs that are present at both ends of said elongated part extend less far radially outwards than the hairs that are present in a portion between said ends. As a result of this, the diameter of the interdental cleaner at the location where it is inserted between the teeth is smaller than that of another part of the cleaner, which other part can be subsequently moved between the teeth. This difference in transverse dimension not only has a positive effect on the cleaning operation, but is also provides a pleasant sensation. Since, according to the invention, the hairs at both ends of said elongated part extend less far outwards, the improved action and the pleasant sensation are achieved in both directions of movement of the interdental cleaner between the teeth.

In practice it has moreover become apparent that the use of the interdental cleaner is facilitated when the resistance of the cleaner first increases and subsequently decreases again when the central portion thereof has passed the interdental space. As a result of this, the cleaner can be moved to and fro more easily, whilst the teeth are cleaned by the correct brush area.

Preferably, the elongated part of the cleaner comprises helically twisted-together metal wires, preferably two metal wires, which twisted-together metal wires may also extend along the other part of the cleaner. The brush hairs may thereby consist of lengths of a flexible wire, which extend radially outwards from the elongated part at both ends thereof. Said lengths of wire may thereby be clamped down between the helically twisted-togther metal wires.

In another preferred embodiment, the elongated part comprises brush hairs which are fixed to a bar-shaped part which is formed integrally with said hairs, which bar-shaped part and which hairs may be jointly formed, and preferably also with the other part of the cleaner, by means of an injection moulding technique.

Preferably, the radially outwardly directed hairs have essentially the same length at both ends of the elongated part. The brush hairs in the central portion between said ends may extend furthest in radially outward direction thereby. Preferably, the ends of said hairs lie substantially on the surface of a body of revolution consisting of two conical surfaces. In that case the brush will have the appearance of a diamond, seen in side view.

Preferably, the length of said wires in the central portion of said elongated part is substantially twice that of the wires at the ends of said elongated part.

In one preferred embodiment, the hairs exhibit different degrees of flexibility, wherein the hairs in the central portion of the elongated part may be more flexible than the hairs at the ends of the elongated part. Such a difference in flexibility of hardness of the brush hairs appears to have a positive effect on the cleaning action.

The invention furthermore relates to a method for manufacturing an interdental cleaner, wherein two wires are helically twisted together with the interposition of lengths of a flexible wire, wherein said lengths of flexible wire, which form the brush hairs, are cut off in such a manner that the ends of the wires are positioned substantially on the surface of a body of revolution which tapers off to both ends. The wires can thereby be cut to the desired length before being clamped between the metal wires. Said cutting may also take place after the brush hairs have been fixed between the metal wires.

Further aspects, which may be used independently as well as in combination with each other, will be described by means of an embodiment or be defined in the claims.

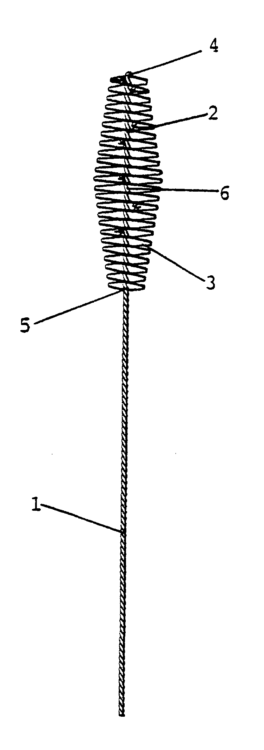

In order to explain the invention more fully, an embodiment of an interdental cleaner will now be described with reference to the drawing.

In the figure, the interdental cleaner is shown on a larger scale. The interdental cleaner is provided along its entire length with helically twisted-together metal wires, which on the one hand form a handle 1, by means of which the cleaner can be taken hold of with one's fingers, and which on the other hand form the carrier 2 for the brush hairs 3, which are shown only diagrammatically.

Brush hairs 3 consist of flexible lengths of wire, which are clamped down in carrier 2 in their central portion as a result of being present between the two twisted-together metal wires. As a result of this, the brush hairs 3 are helically positioned.

The brush hairs 3 extend over an elongated part of the interdental cleaner, which elongated part extends between the front end of the cleaner 4 and the place which is indicated at 5. As appears from the figure, the brush hairs 3 near the front end 4 of the cleaner and the place indicated at 5 are shorter than the brush hairs 3 in the centre of the elongated part which is indicated at 6. The ends of the brush hairs 3 are therefore present on the surface of a body of revolution which tapers off to both ends. Seen in side view, the brush hairs are more or less diamond-shaped.

In one preferred embodiment the brush hairs that are present in the central portion of the elongated part 4, 5 are more flexible than the brush hairs that are present near the ends 4, 5 of the elongated part.

## Claims

1. An interdental cleaner comprising an elongated part (2) with substantially radially outwardly extending brush hairs (3), **characterized in that** the hairs (3) present at both ends (4, 5) of said elongated part (2) extend less far radially outwards than the hairs (3) present in a portion between said ends (4, 5).

2. A cleaner according to claim 1, **characterized in that** the elongated part (2) comprises two helically twisted-together metal wires, wherein the cleaner is preferably provided along its entire length (1, 2) with helically twisted-together metal wires.

3. A cleaner according to any one of the preceding claims, **characterized in that** said hairs (3) consist of lengths of a flexible wire, which extend radially outwards at both ends, which lengths of wire are preferably clamped down between the helically twisted-togther metal wires.

4. A cleaner according to claim 1, **characterized in that** said elongated part (2) comprises brush hairs (3) which are fixed to a bar-shaped part (2) which is formed integrally with said hairs (3), which bar-shaped part (2) and which hairs (3) may be jointly formed, and preferably also with the other part (1) of the cleaner, by means of an injection moulding technique.

5. A cleaner according to any one of the preceding claims, **characterized in that** the radially outwardly directed hairs (3) have essentially the same length at both said ends (4, 5).

6. A cleaner according to any one of the preceding claims, **characterized in that** said hairs (3) in the central portion between said ends (4, 5) extend furthest in radially outward direction.

7. A cleaner according to any one of the preceding claims, **characterized in that** the ends of said hairs (3) lie substantially on the surface of a body of revolution consisting of two conical surfaces.

8. A cleaner according to any one of the preceding claims, **characterized in that** the length of said hairs (3) in the central portion of said elongated part (2) is substantially twice that of the hairs at the ends (4, 5) of said elongated part (2).

9. A cleaner according to any one of the preceding claims, **characterized in that** said hairs (3) exhibit different degrees of flexibility, wherein the hairs (3) in the central portion of the elongated part (2) are preferably be more flexible than the hairs (3) at the ends (4, 5) of said elongated part (2).

10. A method for manufacturing an interdental cleaner, wherein two wires are helically twisted together with the interposition of lengths of a flexible wire, wherein said lengths of wire are cut off in such a manner that the ends of the wires are positioned substantially on the surface of a body of revolution which tapers off to both ends (4, 5).

## Patentansprüche

1. Interdentalreiniger, umfassend einen länglichen Teil (2) mit sich im wesentlichen radial nach außen erstreckenden Bürstenhaaren (3), **dadurch gekennzeichnet, daß** sich die an beiden Enden (4, 5) des länglichen Teils (2) vorhandenen Haare (3) weniger weit radial nach außen als die in einem Bereich zwischen den Enden (4, 5) vorhandenen Haare (3) erstrecken.

2. Reiniger nach Anspruch 1, **dadurch gekennzeichnet, daß** der längliche Teil (2) zwei schraubenförmig verflochtene Metalldrähte umfaßt, worin der Reiniger vorzugsweise entlang seiner gesamten Länge (1, 2) mit schraubenförmig verflochtenen Metalldrähten versehen ist.

3. Reiniger nach irgendeinem der vorangehenden Ansprüche, **dadurch gekennzeichnet, daß** die Haare (3) aus Längen eines flexiblen Drahtes bestehen, die sich an beiden Enden radial nach außen erstrecken, wobei die Drahtlängen vorzugsweise zwischen den schraubenförmig verflochtenen Metalldrähten festgemacht sind.

4. Reiniger nach Anspruch 1, **dadurch gekennzeichnet, daß** der längliche Teil (2) Bürstenhaare (3) umfaßt, die an einem stangenförmigen Teil (2) befestigt sind, der integral mit den Haaren (3) gebildet ist, wobei der stangenförmige Teil (2) und die Haare (3), und vorzugsweise auch mit dem anderen Teil (1) des Reinigers, mittels einer Spritzgießtechnik gemeinsam gebildet sein können.

5. Reiniger nach irgendeinem der vorangehenden Ansprüche, **dadurch gekennzeichnet, daß** die radial nach außen gerichteten Haare (3) an beiden Enden (4, 5) im wesentlichen dieselbe Länge aufweisen.

6. Reiniger nach irgendeinem der vorangehenden Ansprüche, **dadurch gekennzeichnet, daß** sich die Haare (3) in dem zentralen Bereich zwischen den Enden (4, 5) am weitesten in radial nach außen führender Richtung erstrecken.

7. Reiniger nach irgendeinem der vorangehenden Ansprüche, **dadurch gekennzeichnet, daß** die Enden der Haare (3) im wesentlichen auf der Oberfläche eines aus zwei konischen Oberflächen bestehenden Rotationskörpers liegen.

8. Reiniger nach irgendeinem der vorangehenden Ansprüche, **dadurch gekennzeichnet, daß** die Länge der Haare (3) in dem zentralen Bereich des länglichen Teils (2) im wesentlichen das Zweifache derjenigen der Haare an den Enden (4, 5) des länglichen Teils (2) beträgt.

9. Reiniger nach irgendeinem der vorangehenden Ansprüche, **dadurch gekennzeichnet, daß** die Haare (3) unterschiedliche Flexibilitätsgrade aufweisen, worin die Haare (3) in dem zentralen Bereich des länglichen Teils (2) vorzugsweise flexibler als die Haare (3) an den Enden (4, 5) des länglichen Teils (2) sind.

10. Verfahren zur Herstellung eines Interdentalreinigers, **dadurch gekennzeichnet, daß** zwei Drähte unter der Einfügung von Längen eines flexiblen Drahtes schraubenförmig verflochten werden, wobei die Drahtlängen in einer Weise abgeschnitten werden, daß die Enden der Drähte im wesentlichen auf der Oberfläche eines Rotationskörpers positioniert sind, der zu beiden Enden (4, 5) spitz zuläuft.

## Revendications

1. Organe de nettoyage entre les dents, comprenant une partie allongée (2) possédant des soies (3) de brosse qui s'étendent pratiquement en direction radiale vers l'extérieur, **caractérisé en ce que** les soies (3) présentes aux deux extrémités (4, 5) de la partie allongée (2) s'étendent radialement vers l'extérieur moins loin que les soies (3) présentes dans une partie comprise entre les extrémités (4, 5).

2. Organe de nettoyage selon la revendication 1, **caractérisé en ce que** la partie allongée (2) comprend deux fils métalliques retordus en hélice, et l'organe de nettoyage a de préférence sur sa longueur (1, 2) des fils métalliques retordus en hélice.

3. Organe de nettoyage selon l'une quelconque des revendications précédentes, **caractérisé en ce que** les soies (3) sont constituées de tronçons de fils métalliques souples, s'étendant radialement vers l'extérieur aux deux extrémités, les tronçons de fils métalliques étant de préférence serrés entre les fils métalliques retordus en hélice.

4. Organe de nettoyage selon la revendication 1, **caractérisé en ce que** la partie allongée (2) comprend des soies (3) de brosse qui sont fixées à une partie (2) en forme de barre qui est réalisée solidairement avec les soies (3), cette partie (2) en forme de barre et les soies (3) pouvant être sous forme jointe, de préférence aussi avec l'autre partie (1) de l'organe de nettoyage, par une technique de moulage par injection.

5. Organe de nettoyage selon l'une quelconque des revendications précédentes, **caractérisé en ce que** les soies (3) dirigées radialement vers l'extérieur ont essentiellement la même longueur à leurs deux extrémités (4, 5).

6. Organe de nettoyage selon l'une quelconque des revendications précédentes, **caractérisé en ce que** les soies (3) de la partie centrale comprise entre les extrémités (4, 5) s'étendent plus loin en direction radiale vers l'extérieur.

7. Organe de nettoyage selon l'une quelconque des revendications précédentes, **caractérisé en ce que** les extrémités des soies (3) se trouvent pratiquement à la surface d'un corps de révolution constitué de deux surfaces coniques.

8. Organe de nettoyage selon l'une quelconque des revendications précédentes, **caractérisé en ce que** la longueur des soies (3) dans la partie centrale de la partie allongée (2) est pratiquement double de celle des soies des extrémités (4, 5) de la partie allongée (2).

9. Organe de nettoyage selon l'une quelconque des revendications précédentes, **caractérisé en ce que** les soies (3) présentent des degrés différents de flexibilité, les soies (3) de la partie centrale de la partie allongée (2) étant de préférence plus flexibles que les soies (3) se trouvant aux extrémités (4, 5) de la partie allongée (2).

10. Procédé de fabrication d'un organe de nettoyage entre les dents, dans lequel deux fils métalliques sont retordus en hélice avec interposition de tronçons d'un fil métallique flexible, dans lequel les longueurs de fil sont coupées de manière que les extrémités des fils soient disposées pratiquement à la surface d'un corps de révolution dont la dimension diminue vers les deux extrémités (4, 5).
